# EUROPEAN PATENT APPLICATION

(11) **EP 4 502 928 A1**
(43) Date of publication of application: **05.02.2025**
(21) Application number: 23778942.5
(22) Date of filing: 14.02.2023
(51) Int. Cl.: G06T 7/00, G06T 7/70

(54) **OBJECT FEATURE POINT DETECTION DEVICE**

(30) Priority: 31.03.2022 JP 2022058253
(71) Applicant: AISIN CORPORATION, Kariya-shi, Aichi 448-8650 (JP)
(72) Inventor: TOBETA, Masakazu, Kariya-shi, Aichi 448-8650 (JP)
(74) Representative: TBK
(86) International application number: PCT/JP2023/005012
(87) International publication number: WO 2023/188908

(57) **Abstract**

An object feature point detection device according to an embodiment of the present invention includes a detection model (64), a learning part (60), and a parameter optimization part (65). The detection model (64) outputs estimated data including an estimated position of each feature point included in each of a plurality of objects in an input image. The learning part (60) executes the detection model (64) and machine learning of the detection model (64). The parameter optimization part (65) optimizes a parameter for estimating a position of each feature point of an optional object among objects of a plurality of pieces of estimated data output from the detection model (64) to which a training image obtained by imaging a plurality of objects is input. The detection model (64) outputs estimated data including an estimated position of each feature point included in each of a plurality of obj ects in a newly input image by using the parameter optimized by the parameter optimization part (65).

## Description

### TECHNICAL FIELD

An embodiment according to the present invention relate to an object feature point detection device.

### BACKGROUND ART

In recent years, various object joint detection techniques for detecting a joint of an object such as a person and a position thereof from a camera image have been proposed. In the conventional object joint detection technique, a camera image is divided, and object joint detection processing is executed for each region. Therefore, the accuracy of position estimation and connection estimation has been difficult to be improved unless the image is finely divided. As a result, a calculation load in the object joint detection becomes generally heavy.

In an object feature point detection technique such as the object joint detection, it is advantageous if the calculation load can be reduced.

### CITATIONS LIST

### PATENT LITERATURE

Patent Literature 1: JP 2021-86322 A

### SUMMARY OF INVENTION

### TECHNICAL PROBLEMS

Therefore, the present invention provides an object feature point detection device that can reduce a calculation load as compared with the conventional art.

### SOLUTIONS TO PROBLEMS

An object feature point detection device according to an embodiment of the present invention includes, as an example, a detection model, a learning part, and a parameter optimization part. The detection model outputs estimated data including an estimated position for each feature point included in each of a plurality of objects in an input image. The learning part executes the detection model and machine learning of the detection model. The parameter optimization part optimizes a parameter configured to estimate a position of each feature point of an optional object among objects of a plurality of pieces of the estimated data output from the detection model to which a training image obtained by imaging a plurality of objects is input. The detection model outputs estimated data including an estimated position for each feature point included in each of a plurality of objects in a newly input image by using a parameter optimized by the parameter optimization part.

With the above configuration, as an example, a target and type and position of each feature point can be directly estimated without requiring to divide the image into regions and search the entire region of the image. Therefore, only the minimum necessary calculation needs to be executed for detecting a plurality of objects of which the number is determined in advance from the image, and highly accurate position detection can be realized while the calculation load is reduced.

In the object feature point detection device, the learning part includes: a training data storage part that stores a training image obtained by imaging a plurality of objects in association with correct answer data for each object including a correct answer position for each feature point included in each of the objects in the training image; and a calculation part that is configured to, by using estimated data of an optional object among objects of a plurality of pieces of the estimated data output from the detection model to which the training image is input and using the correct answer data for each object: calculate, for each of the objects, a total sum error that is a total sum of errors between the estimated position and the correct answer position for each feature point of the optional object; associate the object corresponding to a minimum total sum error among the total sum errors of each of the objects with the optional object; and determine each of minimum total sum errors as an adopted total sum error group to be used in parameter optimization processing of the detection model, the minimum total sum error being used to make each of objects of a plurality of pieces of the correct answer data correspond to any one of objects of a plurality of pieces of the estimated data.

In addition, the estimated position of the feature point of the object to be detected and the correct answer position of the feature point defined in advance for each object are associated with each other in an optional order. As a result, efficient learning that does not depend on the correct answer order can be realized for the detection model that detects a predetermined number of the plurality of objects from the image.

In the object feature point detection device, the calculation part may exclude an object of correct answer data associated with an object of estimated data from being associated with an object of correct answer data for objects of other pieces of estimated data.

According to the above configuration, in the determination of the adopted total sum error group, in a case where the number of detection objects used for learning is N, the total sum error calculation processing of an integer sum from 1 to N only needs to be executed. As a result, the calculation load in the learning processing can be significantly reduced as compared with the conventional art, and the calculation for detecting the object position by an inexpensive arithmetic processing device can be performed.

In the object feature point detection device, the calculation part may calculate an error by using a loss function that is a sum of total sum errors included in the adopted total sum error group, and the learning part may further include an update part that updates, in the optimization processing, the parameter of the detection model on the basis of the total sum error using the loss function.

With the above configuration, the parameter optimization processing in consideration of the correct answer position of each of the plurality of objects in the training image can be executed, and convergence in learning can be improved.

In the object feature point detection device, the object may be a person, and the feature point may be a joint point of a human body.

With the above configuration, the posture of each of the plurality of persons can be detected with high accuracy while the calculation load is reduced.

An object feature point detection device according to the embodiment of the present invention is, as an example, an object feature point detection device including a detection model that outputs estimated data including an estimated position for each feature point included in each of a plurality of obj ects in an input image, in which the detection model is configured to, by using estimated data of an optional object among objects of a plurality of pieces of the estimated data output from the detection model to which a training image obtained by imaging a plurality of objects is input and using correct answer data for each object including a correct answer position for each feature point included in each of the objects in a training image: calculate, for each of the objects, a total sum error that is a total sum of errors between the estimated position and the correct answer position for each feature point of the optional object; associate the object corresponding to a minimum total sum error among the total sum errors of each of the objects with the optional object; and perform optimization processing of a parameter by using each of minimum total sum errors as an adopted total sum error group, the minimum total sum error being used to make each of objects of a plurality of pieces of the correct answer data correspond to any one of objects of a plurality of pieces of the estimated data.

Therefore, as an example, the image is not required to be searched over the entire region, and the type and position of each feature point can be directly estimated. Therefore, only the minimum necessary calculation needs to be executed for detecting a plurality of objects of which the number is determined in advance from the image, and highly accurate position detection can be realized while the calculation load is reduced.

### BRIEF DESCRIPTION OF DRAWINGS

FIG. 1 is a plan view of a vehicle interior of a vehicle on which an object joint detection device according to an embodiment is mounted as viewed from above.
FIG. 2 is a block diagram showing a configuration of a control system according to the embodiment.
FIG. 3 is a block diagram showing a functional configuration of an electronic control unit (ECU).
FIG. 4 is a diagram for explaining an outline of a detection model.
FIG. 5 is a diagram showing an example of a captured image as input data to the detection model.
FIG. 6 is a diagram showing an outline of training data used for learning of a training detection model.
FIG. 7 is a diagram showing an outline of adopted error group determination processing executed in learning of the detection model.
FIG. 8 is a diagram showing an outline of the adopted error group determination processing executed in learning of the detection model.
FIG. 9 is a diagram showing an outline of the adopted error group determination processing executed in learning of the detection model.
FIG. 10 is a diagram showing an outline of learning processing including the adopted error group determination processing and parameter optimization processing.
FIG. 11 is a flowchart showing an example of a procedure of learning processing executed by the ECU as the object joint detection device.

### DESCRIPTION OF EMBODIMENTS

Hereinafter, modes (hereinafter referred to as "embodiment") for implementing an object feature point detection device according to the present application will be described in detail with reference to the drawings.

The object feature point detection device according to the embodiment outputs estimated data including an estimated position for each feature point included in each of a plurality of objects in an input image. Here, the "object" is a moving body (vehicle, two-wheeled vehicle, person, animal, robot, robot arm, drone, and the like), a three-dimensional structure, or the like.

Note that, in the following, in order to make the description specific, a case where the object to be detected is a person (human body) and the feature point of the object is a joint point of the human body, that is, a case where the object feature point detection device is an object joint detection device is taken as an example.

Note that, according to the embodiment, the object feature point detection device according to the present application is not limited to the object joint detection device. In addition, in each of the following embodiments, the same parts are denoted by the same reference numerals, and redundant description will be omitted.

### [1. Configuration of vehicle]

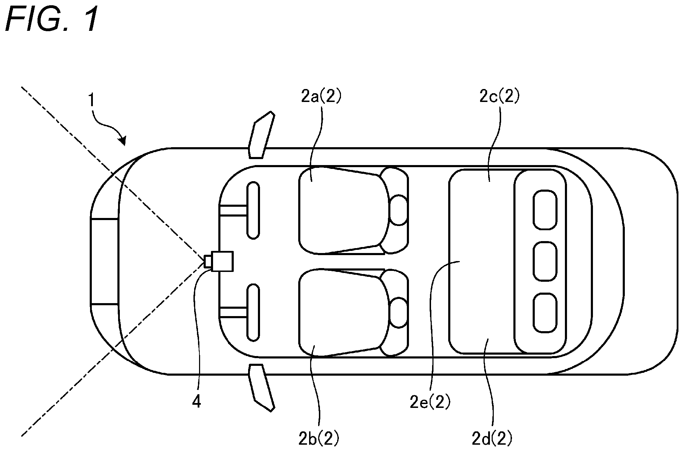

FIG. 1 is a plan view of a vehicle interior of a vehicle 1 on which the object joint detection device according to the embodiment is mounted as viewed from above.

FIG. 1 shows an example of the vehicle interior of the vehicle 1 having a riding capacity of five people. The vehicle interior of the vehicle 1 is provided with a plurality of seats 2. A driver seat 2a and a passenger seat 2b are provided on the front side in the vehicle interior, and a plurality of rear seats 2c to 2e are provided on the rear side. The rear seat 2c is provided behind the driver seat 2a, the rear seat 2d is provided behind the passenger seat 2b, and the rear seat 2e is provided between the rear seat 2c and the rear seat 2d.

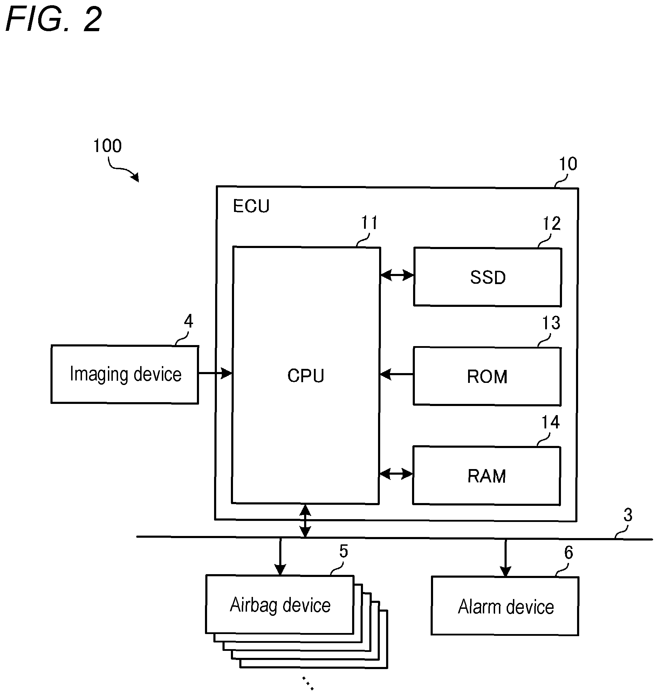

An imaging device 4 is provided on the front side of the vehicle interior. The imaging device 4 incorporates an imaging element such as a charge coupled device (CCD) or a CMOS image sensor (CIS), and outputs an image captured by the imaging element to an ECU 10 (see FIG. 2) to be described later. The imaging device 4 images, for example, the front of the vehicle 1 at a predetermined frame rate.

For example, any type of camera such as a monocular camera, a stereo camera, a visible light camera, an infrared camera, or a time-of-flight (TOF) distance image camera can be adopted as the imaging device 4. Note that, among these cameras, the infrared camera is effective in that halation is less likely to occur even in a situation where the outside of the vehicle is bright, and an occupant can be captured to some extent even in a situation where the inside of the vehicle is dark.

### [2. Configuration of control system 100]

The vehicle 1 is provided with a control system 100 including the object joint detection device. A configuration of the control system 100 will be described with reference to FIG. 2. FIG. 2 is a block diagram showing a configuration of the control system 100 according to the embodiment.

As shown in FIG. 2, the control system 100 includes an in-vehicle network 3, the imaging device 4, a plurality of airbag devices 5, an alarm device 6, and the ECU 10. The ECU 10 is an example of the object joint detection device. The object joint detection device may include the imaging device 4 in addition to the ECU 10.

The plurality of airbag devices 5 is provided corresponding to each of the plurality of seats 2. The airbag device 5 protects an occupant seated on the seat 2 from impact by deploying an airbag in the event of collision or the like of the vehicle 1. The alarm device 6 includes, for example, a warning light, a speaker, and the like, and issues an alarm to the occupant by light or sound. Note that the alarm device 6 may include a communication part and transmit predetermined alarm information to a portable terminal such as a smartphone carried by the occupant.

The ECU 10 includes, for example, a central processing unit (CPU) 11, a solid state drive (SSD) 12, a read only memory (ROM) 13, and a random access memory (RAM) 14. The CPU 11 realizes a function as an object joint detection device by executing a program installed and stored in a nonvolatile storage device such as the ROM 13. The RAM 14 temporarily stores various types of data used in calculation in the CPU 11. The SSD 12 is a rewritable nonvolatile storage device, and can store data even when the power supply of the ECU 10 is turned off. The CPU 11, the ROM 13, the RAM 14, and the like can be integrated in the same package. The ECU 10 may have a configuration in which another logical operation processor such as a digital signal processor (DSP), a logic circuit, or the like is used instead of the CPU 11. A hard disk drive (HDD) may be provided instead of the SSD 12, or the SSD 12 or the HDD may be provided separately from the ECU 10.

The ECU 10 realizes various control functions of the vehicle 1 in addition to the function as the object joint detection device. For example, the ECU 10 can control the airbag device 5 and the alarm device 6 by sending a control signal via the in-vehicle network 3. In addition, the ECU 10 can execute control of a brake system, control of a steering system, and the like. Further, the ECU 10 can acquire an image of the vehicle interior captured by the imaging device 4 from the imaging device 4 via an output line.

### [3. Functional configuration of ECU 10]

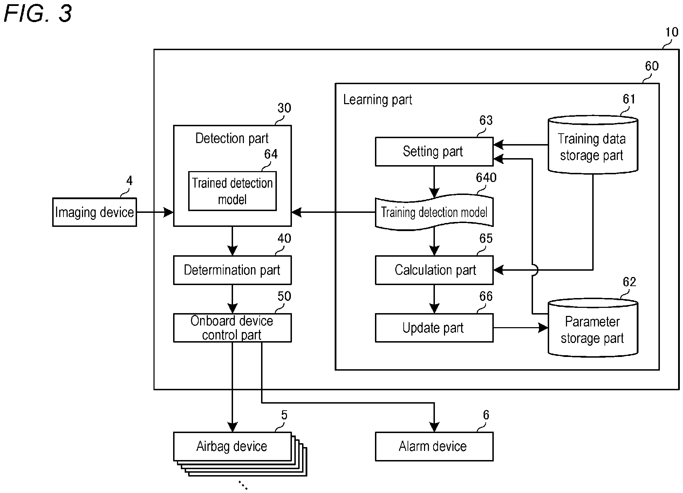

Next, a functional configuration of the ECU 10 will be described with reference to FIG. 3. FIG. 3 is a block diagram showing a functional configuration of the ECU 10.

As shown in FIG. 3, the ECU 10 includes a detection part 30, a determination part 40, an onboard device control part 50, and a learning part 60. The function of each part included in the ECU 10 is realized by the CPU 11 executing a program stored in the ROM 13. Note that these configurations may be implemented by a hardware circuit.

The detection part 30 executes the object position detection processing by using a trained detection model 64 obtained by machine learning to be described later.

The trained detection model 64 inputs an image and outputs an estimated position of each of a predetermined number of objects included in the acquired image. Specifically, the trained detection model is artificial intelligence (AI) such as a trained neural network, and is, for example, a trained model (estimation model) such as a deep neural network (DNN) or a convolutional neural network (CNN).

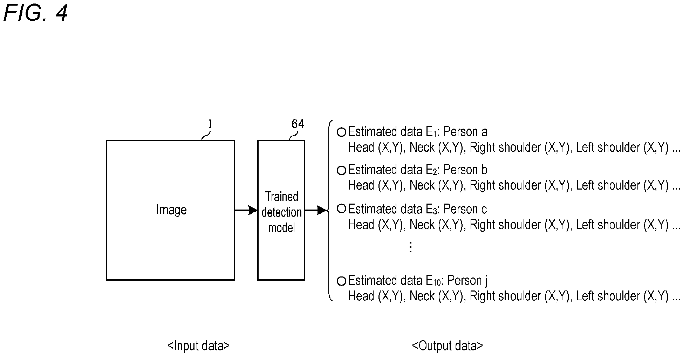

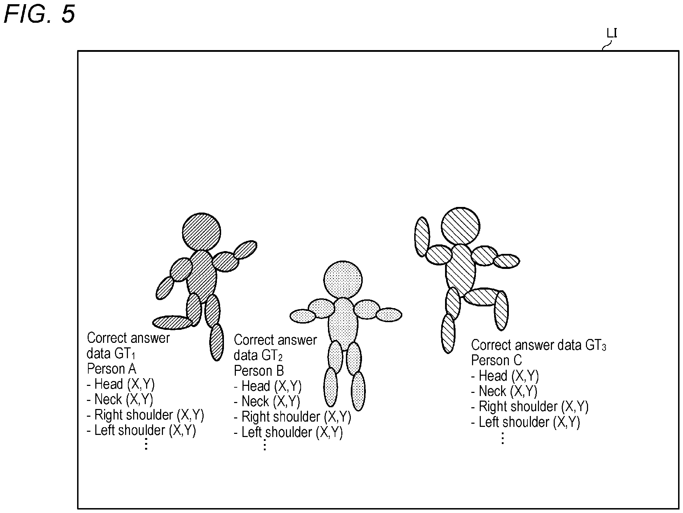

FIG. 4 is a diagram for explaining the object position detection processing using the trained detection model 64. FIG. 5 is a diagram showing an example of a detection image LI as input data to the trained detection model 64.

As illustrated in FIG. 4, the trained detection model 64 inputs an image I obtained by imaging a plurality of obj ects, and outputs estimated data including an estimated position of each joint included in each of the plurality of objects in the image I. That is, in the trained detection model 64, the image is not required to be searched over the entire region, and the type and position of a target and each feature point are directly estimated. Hereinafter, in order to make the description specific, it is assumed that 10 objects are included in a detection image LI as the input data. Note that, in the detection image LI shown in FIG. 5, only a person A, a person B, and a person C are exemplified.

Here, the estimated data output by the trained detection model 64 is the following information. That is, in a case where the detection image LI is input to the trained detection model 64, the estimated data output by the trained detection model 64 is information including recognition (ID) of each object and the estimated position of each joint of each object as shown in FIGS. 4 and 5. For example, the estimated data of the person A is the recognition information (ID) of the object and the estimated position (coordinates) of each joint such as a head (X,Y), a neck (X,Y), a right shoulder (X,Y), or a left shoulder (X,Y). The detection part 30 outputs the estimated position of each joint of each detected object to the determination part 40.

The determination part 40 determines which object is present at which position in front of the vehicle 1 and in what posture (pose) on the basis of the estimated position of each joint of each object detected by the detection part 30. The determination part 40 outputs the determination result to the onboard device control part 50.

The onboard device control part 50 controls various devices mounted on the vehicle 1. As an example, the onboard device control part 50 individually controls a brake, an accelerator, an airbag device, and the like (an example of the in-vehicle device) on the basis of the determination result in the determination part 40.

The learning part 60 executes learning processing of a training detection model 640, and generates the trained detection model 64 by optimizing a network parameter (hereinafter, also simply referred to as a "parameter") of the training detection model 640. The learning part 60 includes a training data storage part 61, a parameter storage part 62, a setting part 63, the training detection model 640, a calculation part 65, and an update part 66.

The training data storage part 61 stores a plurality of pieces of training data including a training image obtained by imaging a predetermined number of objects and correct answer data (teacher data) for each object defined in the training image.

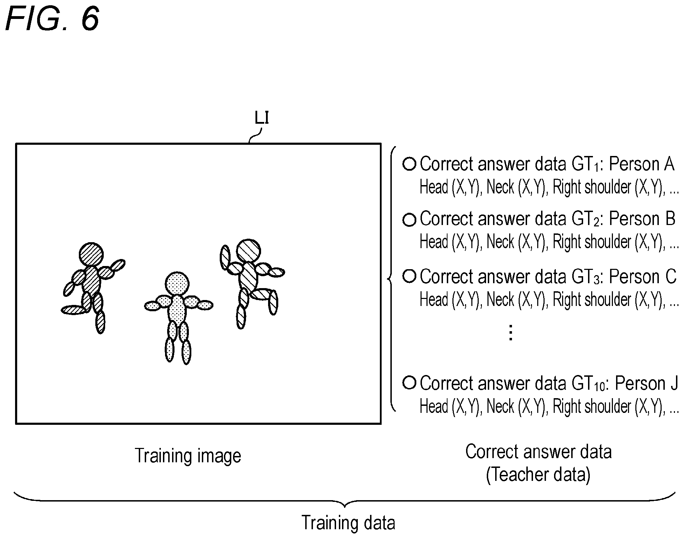

FIG. 6 is a diagram showing an outline of the training data used for learning of the training detection model 640. The training image LI as input data of the training detection model 640 is an image acquired by imaging a plurality of objects. Therefore, the training image LI is an image including 10 objects (three persons are exemplified in FIG. 6) as subjects.

In addition, the correct answer data is defined as an ID (recognition information such as the "person A") indicating what each of the plurality of objects is on the training image LI and a correct answer position (X,Y) of each joint of each object. For example, as illustrated in FIG. 6, in the correct answer data of the person A on the training image LI, the head (X,Y), the neck (X,Y), the right shoulder (X,Y), the left shoulder (X,Y), and the like are defined as those corresponding to the correct answer positions of the respective joints of the person A. The training data includes the training image LI including 10 objects as input data and correct answer data of each object on the training image LI. The training data is prepared as much as necessary for machine learning of the training detection model 640.

The parameter storage part 62 stores a network parameter set in the training detection model 640. The setting part 63 sets the training image and the parameter in the training detection model 640. The calculation part 65 executes adopted error calculation processing and adopted total sum error group determination processing to be described later. The update part 66 executes parameter optimization processing to be described later. Note that the calculation part 65 is an example of a parameter optimization part.

### [4. Learning processing]

The learning processing of the training detection model 640 executed by the learning part 60 includes the adopted total sum error group determination processing and the parameter optimization processing. Here, the adopted total sum error group determination processing is processing of efficiently determining an adopted total sum error group used for a loss function of the machine learning of the training detection model 640 by associating the estimated position and the correct answer position in an optional order. The parameter optimization processing is processing of minimizing the loss function defined by using the adopted total sum error group and optimizing the network parameter of the training detection model 640. Each piece of the processing will be described below.

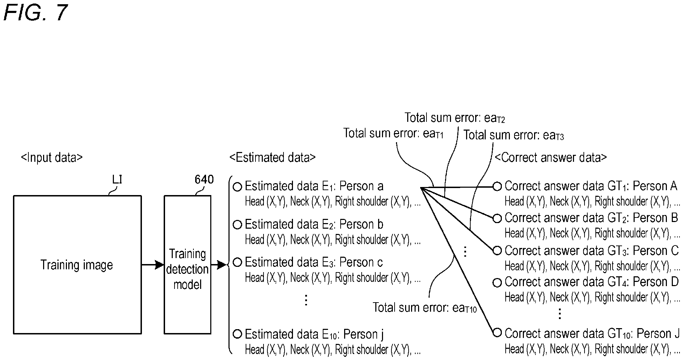

FIGS. 7, 8, and 9 are diagrams for explaining the adopted total sum error group determination processing.

First, as shown in FIG. 7, the training image LI is input to the training detection model 640, and a plurality of pieces of estimated data E₁ to E₁₀ are output as estimated data.

An optional one among the plurality of pieces of estimated data E₁ to E₁₀, for example, the estimated data E₁ of a person a is selected. For each joint included in the selected estimated data E₁, an error between an estimated position thereof and an estimated position of the corresponding joint included in correct answer data GT₁ of the person A is calculated, and the total sum of the obtained error for each joint is calculated as a total sum error ea_{T1}. Similarly, the total sum error calculation processing of calculating a total sum error ea_{T2} to a total sum error ea_{T10} between the selected estimated data E₁ and each of correct answer data GT₂ to correct answer data GT₁₀ of the plurality of remaining persons is executed.

Among the total sum error ea_{T1} to the total sum error ea_{T10} acquired by the above calculation, the smallest total sum error (minimum total sum error) is determined as an adopted total sum error ET₁ used for learning. Note that the example illustrated in FIG. 7 shows a case where the total sum error ea₁ is the adopted total sum error ET₁ (minimum total sum error).

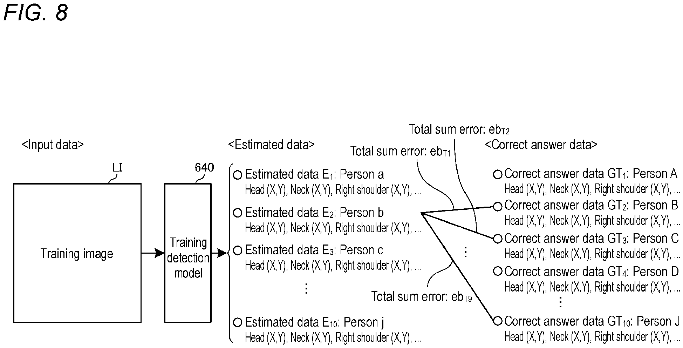

Next, as shown in FIG. 8, an optional one among the plurality of pieces of estimated data E₂ to E₁₀ of the plurality of remaining persons, for example, the estimated data E₂ is selected. For each joint included in the selected estimated data E₂, an error between an estimated position thereof and an estimated position of the corresponding joint included in, for example, correct answer data GT₂ of the person B is calculated, and the total sum of the obtained error for each joint is calculated as a total sum error eb_{T1}. Similarly, the total sum error calculation processing of calculating a total sum error eb_{T2} to a total sum error eb_{T9} between the selected estimated data E₂ and each of the correct answer data GT₃ to the correct answer data GT₁₀ of the plurality of remaining persons is executed.

Among the total sum error eb_{T1} to the total sum error eb_{T9} that are calculated, the minimum total sum error is determined as an adopted total sum error ET₂ used for learning. Note that the example illustrated in FIG. 7 shows a case where the total sum error eb_{T2} is the adopted total sum error ET₂ (minimum total sum error).

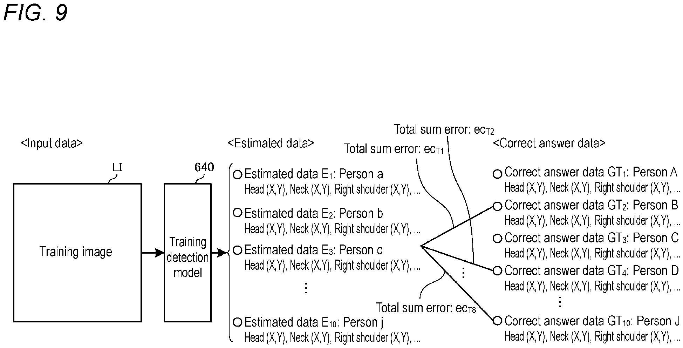

Next, as shown in FIG. 9, an optional one among the plurality of pieces of estimated data E₃ to E₁₀ of the plurality of remaining persons, for example, the estimated data E₃ is selected. For each joint included in the selected estimated data E₃, an error between an estimated position thereof and an estimated position of the corresponding joint included in, for example, correct answer data GT₂ of the person B is calculated, and the total sum of the obtained error for each joint is calculated as a total sum error ec_{T1}. Similarly, the total sum error calculation processing of calculating a total sum error ec_{T1} to a total sum error ec_{T8} between the selected estimated data E₂ and each of the correct answer data GT₄ to the correct answer data GT₁₀ of the plurality of remaining persons is executed.

Among the total sum error ec_{T1} to the total sum error ec_{T8} that are calculated, the minimum total sum error is determined as an adopted total sum error ET₃ used for learning of the object C. Note that the example illustrated in FIG. 9 shows a case where the total sum error ec_{T1} is the adopted total sum error ET₃ (minimum total sum error).

Thereafter, similar processing is executed for the remaining objects, and the adopted total sum errors ET₁ to ET₁₀ used for learning of each object are determined. As a result, 10 times of the total sum error calculation processing for calculating the total sum error ea₁ to the sum error ea₁₀ are executed.

In the present embodiment, the determined adopted total sum error ET₁ to ET₁₀ are referred to as an "adopted total sum error group". A loss function L₁ used in the learning processing using a training image LI₁ and the training data including the correct answer data associated with the training image LI can be defined by using the adopted total sum error group.

For example, the loss function L₁ can be defined by the sum of the adopted total sum errors ET₁ to ET₁₀ constituting the adopted total sum error group. Further, if necessary, the loss function L1 can be set as a weighted linear sum of the adopted total sum errors ET₁ to ET₁₀.

In the adopted total sum error group determination processing described above, in a case where the number of objects to be learned is 10 as described above, the total sum error calculation processing necessary until the adopted total sum errors for all the objects are determined is 10 + 9 + 8 + 7 + 6 + 5 + 4 + 3 + 2 + 1 = 55 times. Furthermore, for example, in a case where the number of objects to be learned is N, the total sum error calculation processing necessary until the adopted total sum errors for all the objects are determined is N(N + 1)/2 times.

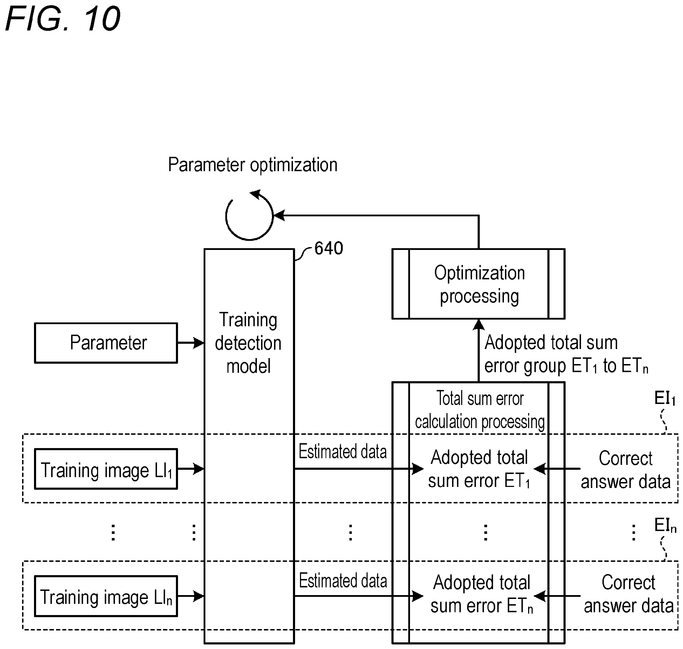

FIG. 10 is a diagram for explaining an outline of the learning processing including the adopted total sum error group determination processing and the parameter optimization processing.

As shown in FIG. 10, the calculation part 65 executes the adopted total sum error group determination processing for each training image and determines the loss function for each training image. Note that, in FIG. 10, the adopted total sum error group determination processing EIₙ corresponds to the training image LIₙ.

The update part 66 sequentially updates the network parameter by using the training data and the corresponding loss function, and executes the parameter optimization processing. As a method of the parameter optimization processing, a general method such as a gradient descent method, a stochastic gradient descent method, or an error back-propagation method can be adopted.

The learning part 60 stores the optimized parameter in the parameter storage part 62. The learning part 60 outputs the optimized parameter to the detection part 30.

### [5. Specific operation of ECU 10]

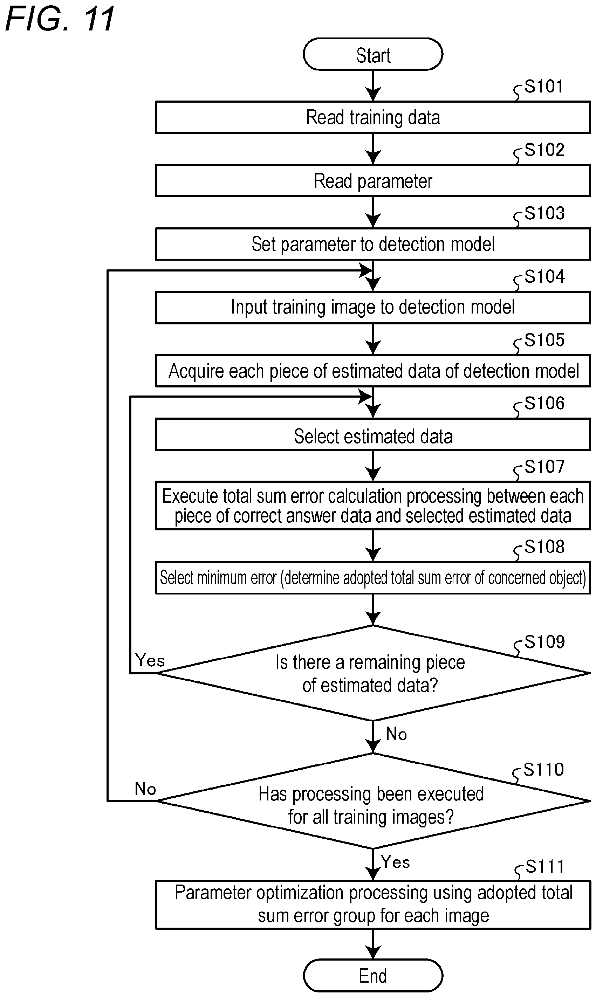

FIG. 11 is a flowchart showing an example of a procedure of the learning processing executed by the ECU 10.

As shown in FIG. 11, the setting part 63 reads the training data from the training data storage part 61 (step S101).

Subsequently, the setting part 63 reads the parameter from the parameter storage part 62 (step S102), and sets the read parameter in the training detection model 640 (step S103).

Subsequently, the training image of the training data read in step S101 is input to the training detection model 640 (step S104).

The calculation part 65 acquires each piece of estimated data output from the training detection model 640 (step S105).

The calculation part 65 selects predetermined (optional) estimated data among the plurality of pieces of acquired estimated data (step S106).

The calculation part 65 executes the total sum error calculation processing between each of the plurality of pieces of correct answer data of the training data read in step S101 and the selected estimated data (step S107). As a result, the total sum error for each of the plurality of objects is calculated.

The calculation part 65 determines the minimum total sum error among the plurality of total sum errors calculated in step S107 as the adopted total sum error for the object corresponding to the selected estimated data (step S108).

The calculation part 65 determines whether or not there is an object for which the adopted total sum error has not been determined (step S109). In a case where it is determined that there is a remaining object (Yes in step S109), the calculation part 65 repeatedly executes the processing of steps S106 to S108. On the other hand, when it is determined that there is no remaining object (No in step S 109), the calculation part 65 determines whether or not the processing has been executed for all the training images (step S110).

In a case where the calculation part 65 determines that the processing has been executed for all the training images, the update part 66 executes the parameter optimization processing using the adopted total sum error group (loss function) for each image (step S111). On the other hand, in a case where the calculation part 65 determines that the processing has not been executed for all the training images, the processing of steps S104 to S109 is repeatedly executed for the remaining training images.

The object joint detection device according to the embodiment described above includes the detection model 64, the learning part 60, and the calculation part 65 as the parameter optimization part. The detection model 64 outputs the estimated data including the estimated position of each feature point included in each of the plurality of objects in the input image. The learning part 60 executes the detection model 64 and the machine learning of the detection model 64. The calculation part 65 optimizes the parameter for estimating a position of each feature point of an optional object among the objects of the plurality of pieces of estimated data output from the detection model 64 to which the training image obtained by imaging the plurality of objects is input. The detection model 64 outputs the estimated data including the estimated position for each feature point included in each of the plurality of objects in a newly input image by using the parameter optimized by the calculation part 65.

Therefore, as an example, a target and type and position of each feature point can be directly estimated without requiring to have the image divided into regions and search the entire region of the image. Therefore, only the minimum necessary calculation needs to be executed for detecting a plurality of objects of which the number is determined in advance from the image, and highly accurate position detection can be realized while the calculation load is reduced.

Furthermore, the learning part 60 includes the training data storage part 61 and the calculation part 65. The training data storage part 61 stores the training image obtained by imaging the plurality of objects in association with the correct answer data for each object including the correct answer position of each feature point included in each object in the training image. The calculation part 65 calculates, for each object, the total sum error that is the total sum of errors between the estimated position and the correct answer position for each feature point of the optional object by using the estimated data of the optional object among the objects of the plurality of pieces of estimated data output from the training detection model 640 to which the training image is input and using the correct answer data for each object. The calculation part 65 associates an object corresponding to the minimum total sum error among the total sum errors for each object with the optional object, and determines each of the minimum total sum errors as the adopted total sum error group used for the parameter optimization processing of the detection model, the minimum total sum error being used to make each of the objects of the plurality of pieces of correct answer data correspond to any one of the objects of the plurality of pieces of estimated data.

Therefore, the estimated position of the feature point of the object to be detected is associated in an optional order with the correct answer position of the feature point defined in advance for each object. As a result, efficient learning that does not depend on the correct answer order can be realized for the detection model that detects a predetermined number of the plurality of objects from the image.

In addition, the calculation part 65 excludes the correct answer position associated with the estimated position from the association with the correct answer position for other estimated positions. That is, in the learning processing of the training detection model 640, the learning part 60 assigns, to any one of the plurality of estimated positions output by the training detection model 640, the correct answer position that is the closest (with the smallest error) from among the plurality of correct answer positions. In addition, in the learning processing of the training detection model 640, the learning part 60 assigns, to any one of the plurality of remaining estimated positions (whose correct answer position has not been assigned) output by the training detection model 640, the correct answer position that is the closest (with the smallest error) from among the plurality of remaining correct answer positions (which have not been assigned to the estimated position).

Therefore, in the determination of the adopted total sum error group, in a case where the number of detection objects used for learning is N, the error calculation processing of only an integer sum from 1 to N only needs to be executed. As a result, the calculation load in the learning processing can be significantly reduced as compared with the conventional art, and the calculation for detecting the object position by an inexpensive arithmetic processing device can be performed.

The calculation part 65 calculates the error by using the loss function that is the sum of the errors included in the adopted error group. In the parameter optimization processing, the learning part 60 updates the parameter of the training detection model 640 on the basis of the error using the loss function that is the sum of the errors included in the adopted error group.

Therefore, the parameter optimization processing in consideration of the correct answer position of each of the plurality of objects in the training image can be executed, and convergence in learning can be improved.

### [First modification]

In the above-described embodiment, the object feature point detection device 1 as the object joint detection device has been described as an example in which the object to be detected is a person, and the feature point is a joint of a human body. However, the object to be detected is not limited to a person, and can be various object targets including a moving body such as a robot, a robot arm, and a vehicle.

For example, in a case where the object to be detected is a robot or a robot arm, a joint, a manipulator portion, or the like of the robot or the like can be used as the feature point. In addition, in a case where the object to be detected is a vehicle, a headlight, a tail lamp, a door, or the like can be used as the feature point. In any case, a similar effect can be realized by preparing correct answer data including a correct answer position of each feature point of an object in the training image and executing the above-described learning processing by using the correct answer data.

### [Second modification]

In the above embodiment, as an example, an example has been described in which the trained detection model 64 is applied to the processing of detecting the object included in the image obtained by imaging the front of the vehicle 1 and the position of the object. However, the present invention is not particularly limited to this example. For example, the trained detection model 64 can be applied to processing of detecting an object included in an image obtained by imaging the side, the rear, or the like of the vehicle 1 and the position of the object. Furthermore, for example, the trained detection model 64 can be applied to processing of detecting a head of a passenger included in an image obtained by imaging the vehicle interior. That is, as long as the number of the plurality of objects included in the image is determined in advance, the positions of the plurality of objects included in the image can be detected by similarly applying the trained detection model 64 even in an image in which any type of subject is imaged.

### [Third modification]

At the time of executing the error calculation processing, the calculation part 65 may make the weight with respect to a width W in the horizontal axis direction and a height H in the vertical axis direction included in each correct answer position and each estimated position larger than the coordinates (X,Y) included in each correct answer position and each estimated position. That is, the size and shape of the bounding box can be adjusted according to a detection target.

### [Fourth modification]

In the above embodiment, the case has been exemplified where the learning part 60 that executes the learning processing of the training detection model 640 and the detection part 30 including the training detection model 640 that performs the estimation processing are built in the same device. However, the learning part 60 and the detection part 30 can be configured as separate devices. Furthermore, for example, the learning part 60 can be realized by a computer on a cloud.

Although the embodiments of the present invention have been exemplified above, the above-described embodiments and modifications are merely examples, and are not intended to limit the scope of the invention. The above-described embodiments and modifications can be implemented in various other forms, and various omissions, substitutions, combinations, and changes can be made without departing from the gist of the invention. In addition, the configuration and shape of each embodiment and each modification can be partially interchanged.

### REFERENCE SIGNS LIST

1: Vehicle, 2: Seat, 3: In-vehicle network, 4: Imaging device, 5: Airbag device, 6: Alarm device, 10: ECU, 30: Detection part, 40: Determination part, 50: Onboard device control part, 60: Learning part, 61: Training data storage part, 62: Parameter storage part, 63: Setting part, 64: Trained detection model, 65: Calculation part, 66: Update part, 100: Control system, and 640: Training detection model

## Claims

1. An object feature point detection device comprising:
a detection model that outputs estimated data including an estimated position for each feature point included in each of a plurality of objects in an input image;
a learning part that executes machine learning of the detection model; and
a parameter optimization part that optimizes a parameter configured to estimate a position of each feature point of an optional object among objects of a plurality of pieces of the estimated data output from the detection model to which a training image obtained by imaging a plurality of objects is input,
wherein
the detection model outputs estimated data including an estimated position of each feature point included in each of a plurality of objects in a newly input image by using a parameter optimized by the parameter optimization part.

2. The object feature point detection device according to claim 1, wherein the learning part comprises:
a training data storage part that stores a training image obtained by imaging a plurality of objects in association with correct answer data for each object including a correct answer position of each feature point included in each of the objects in the training image; and
a calculation part that is configured to, by using estimated data of an optional object among objects of a plurality of pieces of the estimated data output from the detection model to which the training image is input and using the correct answer data for each object: calculate, for each of the objects, a total sum error that is a total sum of errors between the estimated position and the correct answer position for each feature point of the optional object; associate the object corresponding to a minimum total sum error among the total sum errors of each of the objects with the optional object; and determine each of minimum total sum errors as an adopted total sum error group to be used in parameter optimization processing of the detection model, the minimum total sum error being used to make each of objects of a plurality of pieces of the correct answer data correspond to any one of objects of a plurality of pieces of the estimated data.

3. The object feature point detection device according to claim 2, wherein the calculation part excludes an object of correct answer data associated with an object of estimated data from being associated with an object of correct answer data for objects of other pieces of estimated data.

4. The object feature point detection device according to claim 2, wherein
the calculation part calculates an error by using a loss function that is a sum of total sum errors included in the adopted total sum error group, and
the learning part further comprises an update part that updates, in the optimization processing, the parameter of the detection model on a basis of the total sum error using the loss function.

5. The object feature point detection device according to claim 1 or 2, wherein the object is a person, and the feature point is a joint point of a human body.

6. An object feature point detection device comprising a detection model that outputs estimated data including an estimated position of each feature point included in each of a plurality of objects in an input image,
wherein
the detection model is configured to,
by using estimated data of an optional object among objects of a plurality of pieces of estimated data output from the detection model to which a training image obtained by imaging a plurality of object is input and using correct answer data for each object including a correct answer position of each feature point included in each of the objects in a training image: calculate, for each of the objects, a total sum error that is a total sum of errors between the estimated position and the correct answer position of each feature point of the optional object; associate the object corresponding to a minimum total sum error among the total sum errors of each of the objects with the optional object; and perform optimization processing of a parameter by using each of minimum total sum errors as an adopted total sum error group, the minimum total sum error being used to make each of objects of a plurality of pieces of the correct answer data correspond to any one of objects of a plurality of pieces of the estimated data.
